# EUROPEAN PATENT SPECIFICATION

(11) **EP 2 284 594 B1**
(45) Date of publication and mention of the grant of the patent: **27.11.2013**
(21) Application number: 10008145.4
(22) Date of filing: 04.08.2010
(51) Int. Cl.: G02B 26/08, G02B 6/00, G02B 5/04, F21V 8/00, G09G 3/00, G09G 3/34

(54) **Display including waveguide, micro-prisms and micro-mechanical light modulators**
Anzeige, die Wellenleiter, Mikroprismen und mikromechanische Lichtmodulatoren beinhaltet
Affichage incluant un guide d'ondes, micro-prismes et modulateurs lumineux micro-mécaniques

(30) Priority: 13.08.2009 US 583156; 28.05.2010 US 802037
(43) Date of publication of application: 16.02.2011
(73) Proprietor: Pakhchyan, Edward, Glendale, CA 91202 (US); Mesropian, Haik, Glendale, CA 91202 (US); Pakhchyan, Syuzi, Glendale, CA 91206 (US)
(72) Inventor: Pakhchyan, Edward, Glendale, CA 91202 (US); Mesropian, Haik, Glendale, CA 91202 (US); Pakhchyan, Syuzi, Glendale, CA 91206 (US)
(74) Representative: Goddar, Heinz J.

(56) References cited:
- JP-A- 2006 108 033
- US-A1- 2007 279 727
- US-B1- 6 470 115

## Description

### BACKGROUND OF THE INVENTION

### FIELD OF THE INVENTION

The present invention relates generally to displays. More particularly the invention concerns displays comprising an optical waveguide, a light source and a plurality of electromechanical picture elements.

### DISCUSSION OF THE PRIOR ART

Currently liquid crystal displays dominate the flat panel display market. Prior art liquid crystal displays typically comprise a backlight assembly for illumination, light polarizers, color and neutral density filters, and an active matrix liquid crystal layer with thin-film-transistor backplanes. The overall light efficiency of a typical prior art liquid crystal display (LCD) is below 10% mainly due to the fact that light from the backlight assembly has to pass several layers of polarizers, color and neutral density filters. A further problem with LCDs is the slow response time of the liquid crystal resulting in objectionable visible motion artifacts when displaying motion images.

Recently, micro-mechanical flat panel displays based on an optical waveguide were proposed as a viable alternate to LCDs. These displays typically consist of a planar waveguide with parallel surfaces on which a matrix of electrically driven micro-mechanical picture elements is constructed. Light from a light source is introduced to the waveguide from one or more sides of the waveguide and is confined within the waveguide by total internal reflections. Light is extracted from the planar surface of the waveguide by coupling to evanescent waves or by deforming the surface of the planar waveguide to produce an image. There is an inherent optical crosstalk problem when picture elements are simultaneously activated to display an image. The state of one picture element changes the brightness of other picture elements. One solution to the optical crosstalk problem is to activate the picture elements sequentially. This requires very fast micro-mechanical actuators and results in very low light efficiency. Displaying color or grey scale images is generally not practical. Another common problem concerns the use of mirror surfaces to redirect light to the viewer. The same mirror surface reflects the ambient light back to the viewer thereby significantly reducing the contrast at high levels of ambient light.

US 6,470,115 discloses an optical switching element for realization of an image display. The optical switching element comprises a light guide and a light extraction unit mounted on to a thin film. The light extraction unit extracts light from the light guide by coupling to the evanescent waves.

US 2007/0279727 discloses a display which includes an array of light modulators that define a display plane, a light guide and front- and rear-facing reflective surfaces. The light guide includes a plurality of geometric light redirectors, and at least 50% of the light guide's rear surface is parallel to the display plane. The rear-facing reflective surface is parallel to the display plane and includes a plurality of apertures.

JP 2006108033 discloses a plurality of surface light emitting units arranged in parallel with one another. Each surface light emitting unit U2 has a plate-like light guide body 3 having a refractive index ng. A light leakage modulator 8 on the rear side 34 of the light guide body is formed with a composite layer 80 having first and second refraction index regions 81, 82 with refraction indexes n1, n2 (ng>n1, n2>n1), and a third refraction index layer 83 with a refraction index n3 (n3>n1). In each of plurality of prism columns 9 formed on the surface of the light leakage modulator 8, the inclination of a prism face 91 on the side closer to a primary light source 1 is 80-105 degrease with respect to the light emission surface 33 of the light guide body, and the inclination of prism face 92 on the side further away from the primary light source is 35-55 degrease with respect to the emission surface 33 of the light guide body.

### SUMMARY OF THE INVENTION

It is an object of the present invention as defined in the appended claims to provide a display that effectively overcomes the optical crosstalk problem typically found in prior art optical waveguide-based displays. In one form of the invention this object is achieved by providing a display that comprises a light source and an optical waveguide. The optical waveguide distributes light to a plurality of light exits. At each light exit a picture element modulates light by selectively directing the light to the viewer or to a light absorber.

Another object of the invention is to provide a high contrast display of the character that operates at high levels of ambient light. Embodiments of the invention achieve this object by providing a display wherein the majority of the viewing surface is coated with a light-absorbing coating.

Another object of the invention is to provide a display that can compete with LCD's in light efficiency, picture quality and cost. Increased light efficiency is achieved by providing a display in which light travels most of the light path by total internal reflections and light is modulated by requiring fewer reflections from highly reflective micro-mirrors. Improved picture quality is achieved by providing fast and efficient light modulators.

The foregoing as well as other objects of the invention will be achieved by the novel display illustrated in the accompanying drawings and described in the specification that follows.

### BRIEF DESCRIPTION OF THE DRAWINGS

Figure 1 is a generally perspective view of the display of the present invention.
Figure 2 is a cross-sectional view taken along lines 2-2 of Figure 1.
Figure 3 is an enlarged view of the area designated as 3-3 in Figure 2.
Figure 4 is a generally cross-sectional view of an alternate form of display of the invention.
Figure 5 is an enlarged view of the area designated as 5-5 in Figure 4.
Figure 6 is a generally perspective view of an alternate form of the display of the present invention.
Figure 7 is a cross-sectional view taken along lines 6-6 of Figure 6.
Figure 8 is an enlarged view of the area designated as 8-8 in Figure 7.

### DESCRIPTION OF THE INVENTION

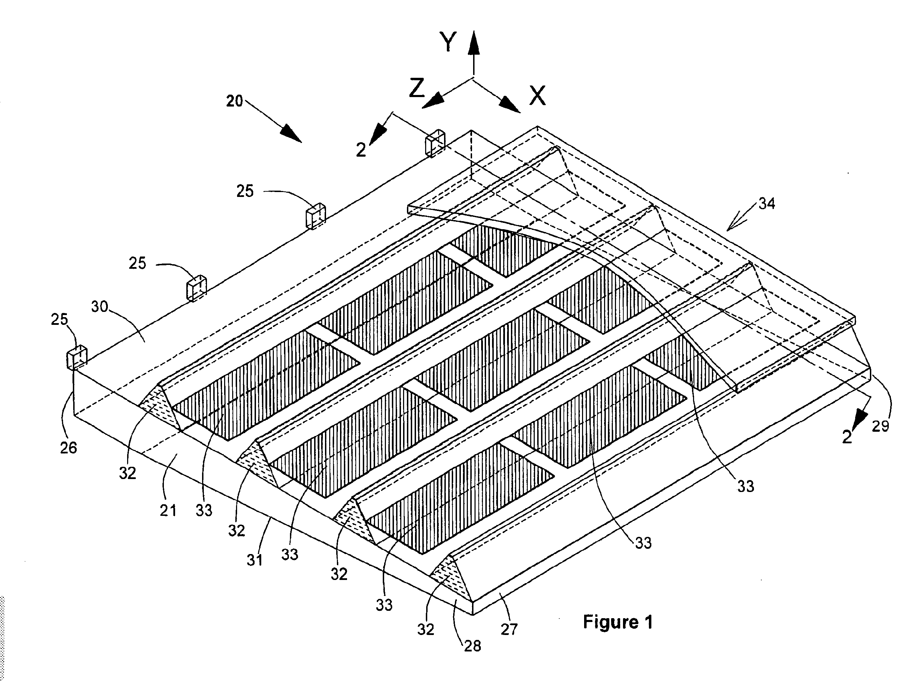

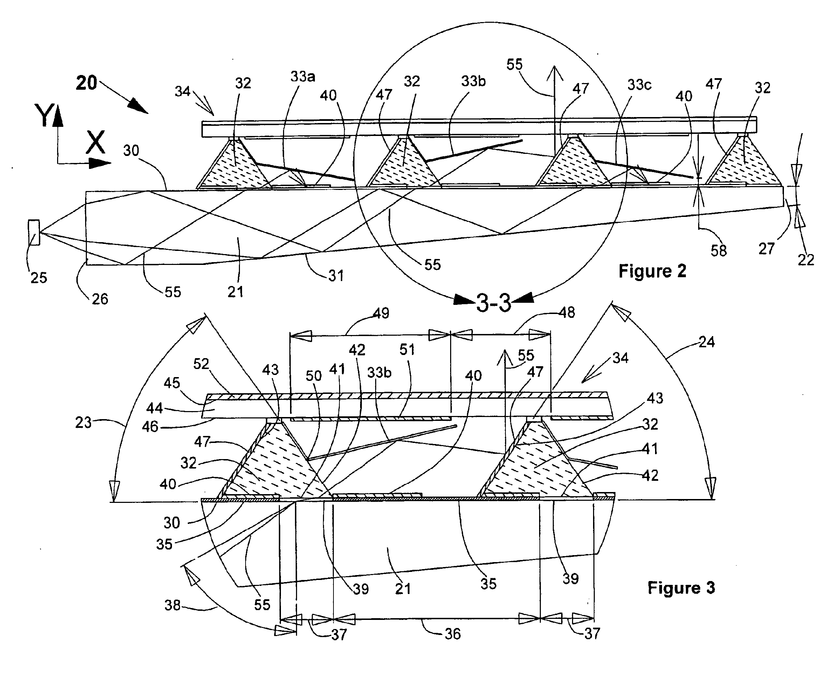

Referring to the drawings and particularly to Figures 1 and 2, one form of the display of the invention is shown there and generally designated by the numeral 20. As best seen in Figure 1, display 20 here includes a generally rectangular shaped optical waveguide 21 that is substantially wedge-shaped cross section. Waveguide 21 is preferably constructed from acrylic or other optically transparent material, having a refractive index n1 with a value between approximately 1.45 and approximately 1.6 and comprises parallel first and second end surfaces 26 and 27 that are joined by parallel side surfaces 28 and 29 (see Figure 1). Waveguide 21 also includes a major upper surface 30 and a lower surface 31 converging with upper surface 30. The lower surface 31 as generally shown in Figure 1 is a flat surface and forming an angle 22 (Figure 2) with a value between approximately 0.1 degrees to approximately 2.0 degrees with the upper surface 30. Also the lower surface 31 may be a curved surface forming varying angles with the upper surface 30 of the waveguide 21 or include a plurality of stepwise facets for controlling the display light uniformity. A plurality of substantially equally spaced-apart micro-prisms 32 are constructed at upper surface 30 and, as generally shown in Figure 1, extend between side surfaces 28 and 29. Micro-prisms 32 may be molded or constructed using lithography from a UV curing polymer having a refractive index n2 with a value between approximately 1.45 and approximately 1.6. LED light sources 25 are installed proximate the wide edge 26 of the waveguide 21 and a plurality of tilting micro-mirrors 33 are constructed between micro-prisms 32. In Figure 2, one column of the tilting micro-mirrors is designated as 33a, 33b, and 33c. Figure 1 also illustrates a section of a cover assembly 34. More detailed construction of the cover assembly 34 is illustrated in Figure 3.

Now referring to Figure 3 of the drawings where more details of multilayer optical coatings are shown. The first layer is a light reflecting layer 35 constructed from metal or multilayer dielectric materials on the upper surface 30 of the waveguide 21. The light reflecting layer 35 is patterned to form plurality of light reflecting regions 36 and light transmitting regions 37. The second optical layer is a light transmitting layer 39 formed from a fluoropolymer or other substantially transparent material having a refractive index n3 with a value between approximately 1.3 and approximately 1.4. The light transmitting layer 39 is formed only in the light transmitting regions 37 as shown in Figure 3 on the upper surface 30 of the waveguide 21. Also the light transmitting layer 39 may be a continuous layer formed between the light reflecting layer 35 and upper surface 30 of the waveguide 21. The third optical layer is a light absorbing layer 40 formed on light reflecting layer 35 and is patterned to partially cover light reflecting layer 35. A black oxide layer may be formed on upper surface of light reflecting layer 35 instead of light absorbing layer 40.

Further illustrated in Figure 3 are micro-prisms 32. Each micro-prism 32 comprises a light input facet 41 which is optically coupled to the upper surface 30 of waveguide 21 via light transmitting layer 39 and a light exit facet 42 which is inclined with respect to the upper surface 30 of waveguide 21 and forms an angle 23 with a value between approximately 45 degrees to approximately 65 degrees. A reflective mirror film is deposited on the third facet 43 of micro-prisms 32 to form a light reflecting facet 47, which is also inclined with respect to the upper surface 30 of waveguide 21 and forms an angle 24 with a value between approximately 30 degrees to approximately 50 degrees.

Figure 3 also illustrates one of the tilting micro-mirrors 33b which typifies the construction of each of the micro-mirrors of the present form of the invention. Micro-mirror 33b comprises a thin aluminum alloy elastic film that is affixed to the upper portion of the light exit facet 42 of micro-prism 32 and it tilts in two directions at about axis 50 that is substantially parallel to the upper surface 30 of the waveguide 21.

Further illustrated in Figure 3 is a cover assembly 34 which is affixed to the upper facets of micro-prisms 32. Cover assembly 34 comprises a substrate 44 made of glass or other substantially transparent material. A light absorbing layer 51 constructed on the lower surface 46 of substrate 44 from conductive light absorbing film or a multilayer film that includes a conductor layer. The light absorbing layer 51 is patterned to form a plurality of light absorbing regions 49 located directly above micro-mirrors 33 and display light exit regions 48. The cover assembly 34 further includes a light shaping diffuser 52 formed on the upper surface 45 of substrate 44.

For absorbing ambient light a black oxide layer may be formed on upper surface of micro-mirrors 33 and patterned light absorbing layer 51 may be replaced with a transparent conductor. This will remove the requirement of the alignment of patterned light absorbing layer 51 with the micro-mirrors 33.

In the present form of the invention, the tilting micro-mirrors 33 operate by electrostatic attraction force. The conductive light reflecting layer 35 and conductive light absorbing layer 51 act as fixed electrodes for the tilting micro-mirrors 33.

When a suitable voltage is applied between the conductive light reflecting layer 35 and a micro-mirror 33, the micro-mirror tilts down by electrostatic attraction force. When a suitable voltage is applied between the conductive light absorbing layer 51 and a micro-mirror 33, the micro-mirror tilts up by electrostatic attraction force.

To prevent micro-mirror stiction a small gap 58 (Figure 2) is required between the edge of the micro-mirrors and the landing surfaces. This may be realized by constructing small spacers on landing surfaces or extending small portions of micro-mirrors along the edge so the entire edge of the micro-mirrors do not touch the landing surfaces.

As best seen in Figure 2 of the drawings, light rays 55 entering from the wide edge 26 of the waveguide 21 reflect from the upper surface 30 and the lower surface 31 by total internal reflections and change angles towards normal with respect to the upper surface 30. Light rays 55 exit the waveguide 21 from the light transmitting regions 37 (Figure 3) when the incident angle is less than the critical angle 38 defined by the refractive index n1 of the waveguide 21 and refractive index n3 of light transmitting layer 39. Light rays passing through the light transmitting layer 39 enter the micro-prisms 32 from the light input facet 41 and change the angle defined by the refractive index n2 of the micro-prisms. Light rays exit the micro-prisms from the light exit facets 42.

Depending on the positions of the tilting micro-mirrors, light rays are absorbed, or directed to the viewer. When a tilting micro-mirror is in the up position, such as micro mirror 33b (Figure 2), most light rays exiting from light exit facet 42 of micro-prisms 32 reflect from the lower surface of the micro-mirrors and are directed to the viewer by reflecting from light reflecting facets 47. When a micro-mirror is tilted down, such as micro-mirrors 33a and 33c, most light rays exiting from light exit facet 42 of micro-prisms 32 reflect from the lower surface of the micro-mirrors and are absorbed in the light absorbing layer 40.

To prevent light leakage when micro-mirrors are in the tilted down position from the gap 58 the display 20 limits the minimum angle that light rays can exit from the light exit facets 42 of the micro-prisms 32 with respect to the upper surface 30 of the waveguide 21. The minimum angle is defined by the refractive indexes n1, n2, n3 and angle 23.

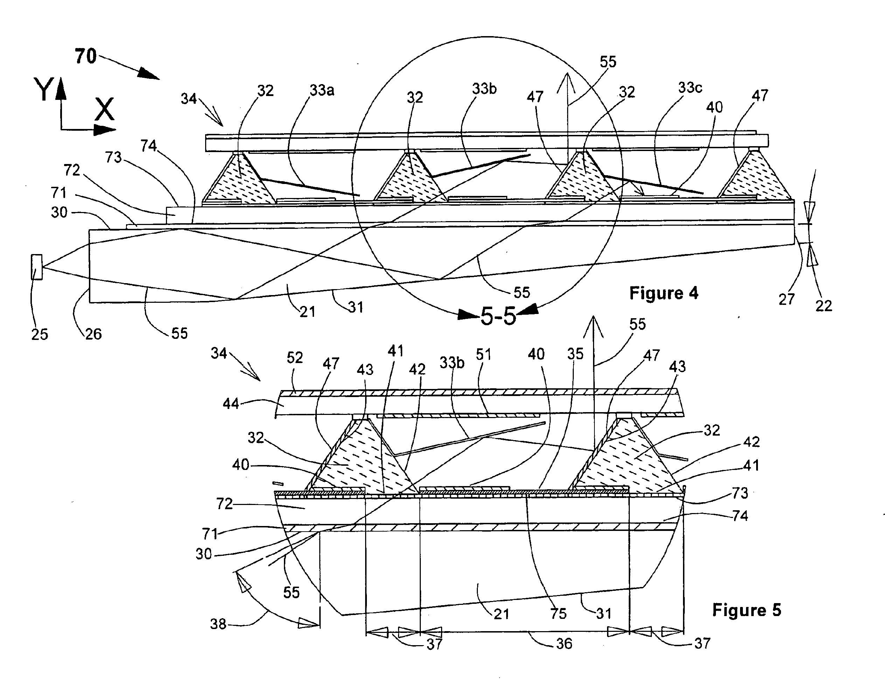

Referring now to Figure 4 of the drawings, a cross-sectional view of another embodiment of display of the present invention is there shown and generally designated by the numeral 70. This latest embodiment is similar in some respect to the embodiment shown in Figures 1 and 2 of the drawings and like numbers are used in Figure 4 to identify like components.

The display 70 is a full color display wherein each picture element comprises of Red, Green and Blue sub-pixels and includes dichoric filters for separating RGB colors from a white light source or from RGB light sources that are mixed in the waveguide 21.

The display 70 includes optical waveguide 21 and LED light sources 25 that are installed proximate the wide edge 26 of the waveguide 21. Display 70 also includes a substrate 72 constructed from a substantially transparent material such as glass having a refractive index n4 with a value between approximately 1.45 and approximately 1.6. The lower surface 74 of substrate 72 is optically coupled to the upper surface 30 of waveguide 21 via an optical layer 71 formed from a substantially transparent material having a refractive index n3 with a value between approximately 1.3 and approximately 1.4.

A plurality of equally spaced-apart micro-prisms 32 are constructed at upper surface 73 of substrate 72 and tilting micro-mirrors 33 are constructed between micro-prisms 32. Like before the cover assembly 34 is affixed to the upper facets of micro-prisms 32.

Now referring to Figure 5 of the drawings where more details of multilayer optical coatings are shown. The first optical layer is a dichroic filter 75 formed on the upper surface 73 of the substrate 72. The second optical layer is a light reflecting layer 35 constructed from metal on the dichroic filter 75. The light reflecting layer 35 is patterned to form plurality of light reflecting regions 36 and light transmitting regions 37. The third optical layer is a light absorbing layer 40 formed on light reflecting layer 35 and is patterned to partially cover light reflecting layer 35.

Also illustrated in Figure 5 are micro-prisms 32. Each micro-prism 32 comprises a light input facet 41, which is optically coupled to the upper surface 30 of waveguide 21 via dichroic filter 75, substrate 72 and optical layer 71. Each micro-prism 32 also includes a light exit facet 42 and a mirror film is deposited on the third facet 43 of micro-prisms 32 to form light reflecting facets 47.

Figure 5 also illustrates one of micro-mirrors 33 and cover assembly 34 that was described before in Figure 3.

As best seen in Figure 4 of the drawings, light rays 55 entering from the wide edge 26 of the waveguide 21 reflect from the upper surface 30 and the lower surface 31 by total internal reflections and change angles towards normal with respect to the upper surface 30. Light rays 55 exit the waveguide 21 from the upper surface 30 and enter substrate 72 through the light transmitting layer 71 when the incident angle is less than critical angle 38 (Figure 5) defined by the refractive index n1 of the waveguide 21 and refractive index n3 of light transmitting layer 71. Dichroic filters selectively pass RGB colors in the light transmitting regions 37 into the micro-prisms 32. And light exits micro-prisms 32 from the light exit facets 42. As before depending on the positions of the tilting micro-mirrors, light rays are absorbed, or directed to the viewer.

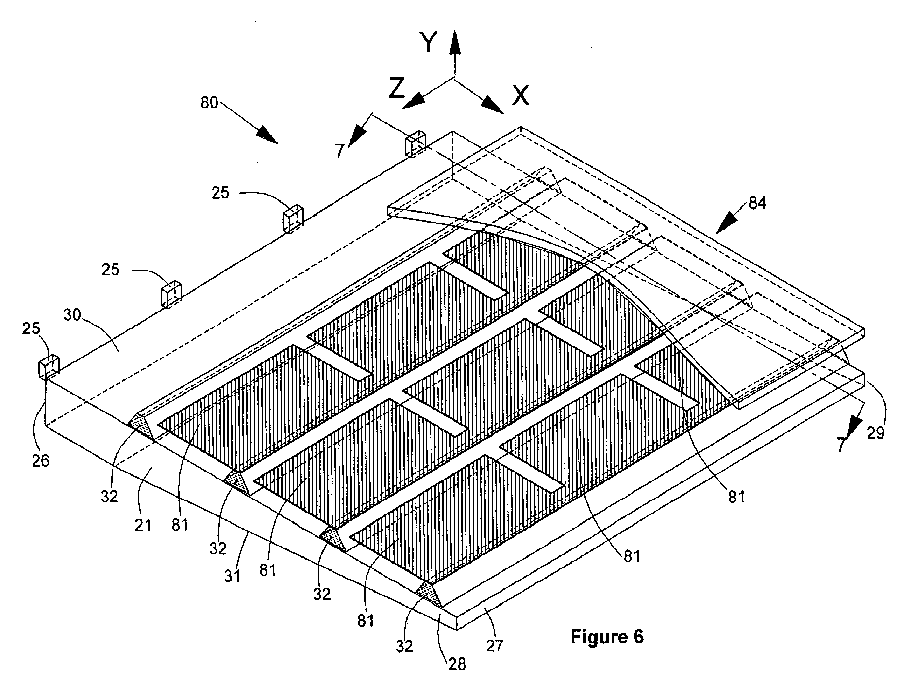

Referring now to Figures 6, 7 and 8 of the drawings another embodiment of display of the present invention is there shown and generally designated by the numeral 80.

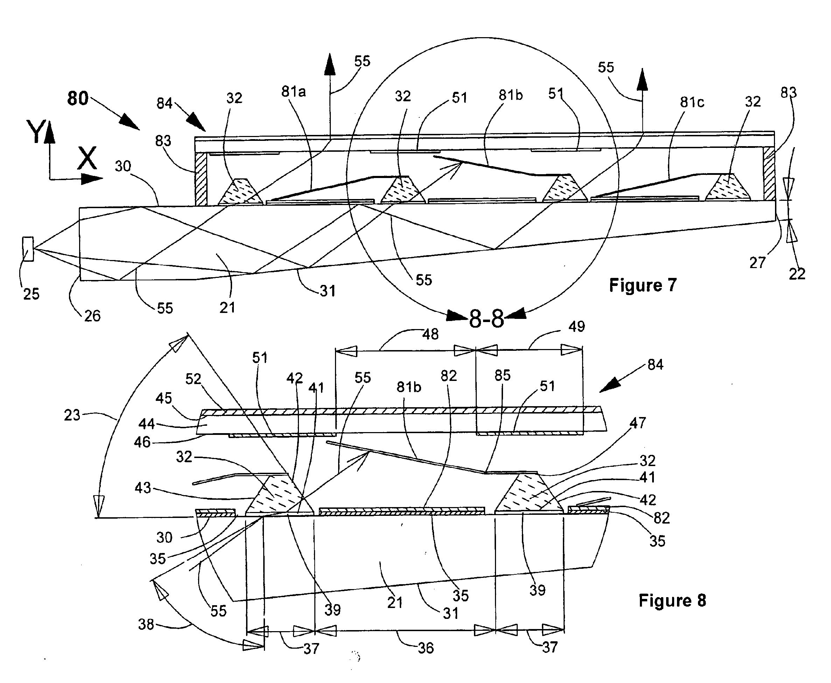

As before the display 80 includes optical waveguide 21, light sources 25 that are installed proximate the wide edge 26 of the waveguide 21 and micro-prisms 32 are constructed at upper surface 30 and, as generally shown in Figure 6, extend between side surfaces 28 and 29 of the waveguide 21. The display 80 further includes a plurality of tilting micro-shutters 81 that are constructed between micro-prisms 32. In Figure 7, one column of the tilting micro-shutters is designated as 81a, 81b, and 81c. Figure 6 also illustrates a section of a cover assembly 84. More detailed construction of the cover assembly 84 is illustrated in Figure 8.

Now referring to Figure 8 of the drawings where more details of multilayer optical coatings are shown. The first layer is a light reflecting layer 35 constructed from metal or multilayer dielectric materials on the upper surface 30 of the waveguide 21. The light reflecting layer 35 is patterned to form plurality of light reflecting regions 36 and light transmitting regions 37. The second optical layer is a light transmitting layer 39 formed from a fluoropolymer or other substantially transparent material having a refractive index n3 with a value between approximately 1.3 and approximately 1.4. The light transmitting layer 39 is formed only in the light transmitting regions 37 as shown in Figure 8 on the upper surface 30 of the waveguide 21. Also the light transmitting layer 39 may be a continuous layer formed between the light reflecting layer 35 and upper surface 30 of the waveguide 21. The third optical layer is a light absorbing layer 82 formed from a dielectric material on light reflecting layer 35 and is patterned to partially cover light reflecting layer 35. A black oxide layer may be formed on upper surface of light reflecting layer 35 instead of light absorbing layer 82. Also the light absorbing layer 82 may be replaced with a light absorbing film and placed below the lower surface 31 of the waveguide 21.

Further illustrated in Figure 8 are micro-prisms 32. Each micro-prism 32 comprises a light input facet 41 which is optically coupled to the upper surface 30 of waveguide 21 via light transmitting layer 39 and a light exit facet 42 which is inclined with respect to the upper surface 30 of waveguide 21 and forms an angle 23 with a value between approximately 45 degrees to approximately 65 degrees. Micro-prisms 32 further include a facet 43 which is inclined opposite to the light exit facet 42 and an upper facet 47 which is generally parallel to the light input facet 41.

Figure 8 also illustrates one of the tilting micro-shutters 81b which typifies the construction of each of the micro-shutters of the present form of the invention. Micro-shutter 81b comprises a thin aluminum alloy elastic film that is affixed to the upper facet 47 of micro-prism 32b and it tilts in two directions at about axis 85 that is substantially parallel to the upper surface 30 of the waveguide 21. For absorbing light, a black oxide layer or a black polymer film may be formed on surfaces of micro-shutters 81.

Further illustrated in Figure 8 is a cover assembly 84 which is affixed to the upper surface 30 of waveguide 21 with spacers 83 (see Figure 7). The construction of the cover assembly 84 is similar to the cover assembly 34 that was described above.

In the present form of the invention, the tilting micro-shutters 81 operate by electrostatic attraction force. The conductive light reflecting layer 35 and conductive light absorbing layer 51 act as fixed electrodes for the tilting micro-shutters 81.

When a suitable voltage is applied between the conductive light reflecting layer 35 and a micro-shutter 81, the micro-shutter tilts down by electrostatic attraction force. When a suitable voltage is applied between the conductive light absorbing layer 51 and a micro-shutter 81, the micro-shutter tilts up by electrostatic attraction force.

To prevent micro-shutter stiction, a small gap is required between the edge of the micro-shutters and the landing surfaces. This may be realized by constructing small spacers from a low friction material on landing surfaces or extending small portions of micro-shutters along the edge so the entire edge of the micro-shutters do not touch the landing surfaces. Additionally the black polymer coatings on the micro-shutters may be formed from a non stick material.

As best seen in Figure 7 of the drawings, light rays 55 entering from the wide edge 26 of the waveguide 21 reflect from the upper surface 30 and the lower surface 31 by total internal reflections and change angles towards normal with respect to the upper surface 30. Light rays 55 exit the waveguide 21 from the light transmitting regions 37 (Figure 8) when the incident angle is less than the critical angle 38 defined by the refractive index n1 of the waveguide 21 and refractive index n3 of light transmitting layer 39. Light rays passing through the light transmitting layer 39 enter the micro-prisms 32 from the light input facet 41 and change the angle defined by the refractive index n2 of the micro-prisms. Light rays exit the micro-prisms from the light exit facets 42.

Depending on the positions of the tilting micro-shutters, light rays are absorbed, or directed to the viewer.

When a tilting micro-shutter is in the up position, such as micro-shutter 81b (Figure 7), most light rays exiting from light exit facet 42 of micro-prisms 32 are absorbed in light absorber coatings of micro-shutters 81. Any light reflected from the lower surface of the micro-shutters 81 will be absorbed in the light absorbing layer 40.

When a micro-shutter is tilted down, such as micro-shutters 81a and 81c, most light rays exiting from light exit facet 42 of micro-prisms 32 exit the display 80 from display light exit regions 48 and are directed to the viewer.

The above described displays will work with infrared, visible and ultraviolet light sources and combinations thereof.

Depending on the display size and resolution, each picture element of the display panel may include several tilting light modulators. Reducing the size of individual light modulators helps to reduce the required electrostatic actuation voltages.

Also, light modulators for each picture element may be grouped to modulate different levels of light when suitable voltage is applied between the fixed electrodes and a selected group of light modulators. This reduces the display addressing constraints. For example, each picture element may include 7 light modulators grouped in quantities of 1, 2 and 4 and selectively addressed to modulate 8 levels of light. Additionally, temporal artifacts inherent in pulse-width-modulation displays are reduced.

To increase the efficiency and reduce light scattering various antireflection coatings may be applied to surfaces where light transitions between two different materials.

Dichroic layers that comprise a low pass filter for the Blue color and a high pass filter for the Red color may be formed to overlap in the light reflecting regions 36.

To simplify manufacturing of micro-mirrors, micro-prisms may be split to lower and upper sections and micro-mirrors may be formed on a flat surface after forming the lower sections of micro-prisms.

Having now described the invention in detail in accordance with the requirements of the patent statutes, those skilled in this art will have no difficulty in making changes and modifications in the individual parts or their relative assembly in order to meet specific requirements or conditions. Such changes and modification may be made without departing from the following claims.

## Claims

1. A display (20, 80) comprising:
(a) a light source for generating light(25);
(b) an optical waveguide (21) for receiving and distributing said light, said optical waveguide having a refractive index n1, an upper surface (30) and a spaced-apart lower surface (31) converging with said upper surface;
(c) a plurality of spaced-apart micro-prisms (32), each said micro-prism comprising: a refractive index n2, a light input facet (41) optically coupled to said upper surface of said optical waveguide via an optical layer (39) having a refractive index n3 which is less than said refractive index n2 and said refractive index n1 and greater than 1, and a light exit facet(42) located above said upper surface of said optical waveguide and inclined opposite to said lower surface of said optical waveguide; and
**characterized by**
(d) a plurality of tilting light modulators (33, 81), each said tilting light modulator having a tilt axis (50, 85) substantially parallel to said upper surface of said optical waveguide and located between said spaced-apart micro-prisms;
wherein most light rays exiting each said light exit facet of said micro-prisms are directed to the viewer when a respective tilting light modulator is at a first position or absorbed in a light absorber (40, 82) when said respective tilting light modulator is at a second position.

2. A display according claim 1 further includes a light reflecting layer (35) disposed proximate said upper surface of said optical waveguide, constructed from a metal having a specular light reflecting lower surface and a light absorbing upper surface.

3. A display according claim 2 wherein said optical layer is formed between said light reflecting layer and said upper surface of said optical waveguide.

4. A display according claim 2 or 3 wherein each said tilting light modulator is actuated by electrostatic force and said light reflecting layer functions as a fixed electrode for said tilting light modulators.

5. A display according any of preceding claim wherein each said tilting light modulator tilts in two directions from said tilt axis.

6. A display according any of preceding claim wherein said plurality of tilting light modulators are divided to a plurality of groups and light modulators of each said group tilt simultaneously by an electrostatic force.

7. A display according any of preceding claim further includes a cover assembly (34, 84) comprising: a substantially transparent substrate (44), a light absorbing layer (51) and a light shaping diffuser layer (52) formed on said substantially transparent substrate.

8. A display according any of preceding claim wherein said light exit facet of each said micro-prism forms an angle of between approximately 45 degrees and approximately 65 degrees relative to said upper surface of said optical waveguide.

9. A display according any of preceding claim wherein said refractive index n1 is between approximately 1.45 and 1.6, and said refractive index n2 is between approximately 1.45 and 1.6, and said refractive index n3 is between approximately 1.3 and 1.4.

10. A display according any of preceding claim wherein said light input facet of each said micro-prisms is optically coupled to said upper surface of said optical waveguide via a dichroic filter (75).

11. A display according any of preceding claim wherein each said tilting light modulator is affixed on a selected one of said micro-prisms.

12. A display according any of preceding claim wherein said optical layer is constructed from a fluoropolymer and each said micro-prism is constructed from a UV curing polymer.

13. A display according any of preceding claim wherein each said tilting light modulator includes a light absorbing surfaces.

14. A display according any of claim 1-12 further includes a light reflecting facet formed on a third facet of each of said micro-prisms and each said tilting light modulator comprises a specular light reflecting lower surface and a light absorbing upper surface.

15. A display of claim 14 wherein said third facet of each of said micro-prisms forms an angle of between approximately 30 degrees and approximately 50 degrees relative to said upper surface of said optical waveguide.

## Patentansprüche

1. Anzeige (20, 80), umfassend:
(a) eine Lichtquelle zum Erzeugen von Licht (25);
(b) einen optischen Wellenleiter (21) zum Aufnehmen und Verteilen des Lichts, wobei der optische Wellenleiter einen Brechungsindex n1, eine obere Oberfläche (30) und eine in einem Abstand davon angeordnete untere Oberfläche (31), die mit der oberen Oberfläche konvergiert, aufweist;
(c) eine Anzahl von in einem gegenseitigen Abstand angeordneten Mikroprismen (32), wobei jedes Mikroprisma umfasst: einen Brechungsindex n2, eine Lichteingangsfacette (41), die mit der oberen Oberfläche des optischen Wellenleiters über eine optische Schicht (39), die einen Brechungsindex n3 aufweist, der kleiner ist als der Brechungsindex n2 und der Brechungsindex n1 und größer als 1, optisch gekoppelt ist, und eine Lichtausgangsfacette (42), die oberhalb der oberen Oberfläche des optischen Wellenleiters angeordnet ist und entgegengesetzt zu der unteren Oberfläche des optischen Wellenleiters geneigt ist; und
**gekennzeichnet durch**
(d) eine Anzahl von Neigungs-Lichtmodulatoren (33, 81), wobei jeder der Neigungs-Lichtmodulatoren eine Neigungsachse (50, 85) aufweist, die im Wesentlichen parallel zu der oberen Oberfläche des optischen Wellenleiters ist und zwischen den in einem gegenseitigen Abstand angeordneten Mikroprismen angeordnet ist;
wobei die meisten Lichtstrahlen, die aus jeder Lichtausgangsfacette der Mikroprismen austreten, zu dem Betrachter gelenkt werden, wenn sich ein jeweiliger Neigungs-Lichtmodulator in einer ersten Position befindet, oder in einem Lichtabsorber (40, 82) absorbiert werden, wenn sich der jeweilige Neigungs-Lichtmodulator in einer zweiten Position befindet.

2. Anzeige nach Anspruch 1, **dadurch gekennzeichnet, dass** sie weiterhin eine lichtreflektierende Schicht (35) umfasst, die zunächst der oberen Oberfläche des optischen Wellenleiters angeordnet ist und aus einem Metall aufgebaut ist, das eine spiegelnde lichtreflektierende untere Oberfläche und eine lichtabsorbierende obere Oberfläche aufweist.

3. Anzeige nach Anspruch 2, **dadurch gekennzeichnet, dass** die optische Schicht zwischen der lichtreflektierenden Schicht und der oberen Oberfläche des optischen Wellenleiters ausgebildet ist.

4. Anzeige nach Anspruch 2 oder 3, **dadurch gekennzeichnet, dass** jeder Neigungs-Lichtmodulator durch elektrostatische Kräfte betätigt ist und die lichtreflektierende Schicht als feste Elektrode für die Neigungs-Lichtmodulatoren wirkt.

5. Anzeige nach einem der vorangehenden Ansprüche, **dadurch gekennzeichnet, dass** jeder der Neigungs-Lichtmodulatoren in zwei Richtungen bezüglich der Neigungsachse neigbar ist.

6. Anzeige nach einem der vorangehenden Ansprüche, **dadurch gekennzeichnet, dass** die Anzahl von Neigungs-Lichtmodulatoren in eine Anzahl von Gruppen unterteilt ist und Lichtmodulatoren einer jeden Gruppe gleichzeitig durch eine elektrostatische Kraft geneigt werden.

7. Anzeige nach einem der vorangehenden Ansprüche, weiter umfassen eine Abdeckanordnung (34, 84), umfassend: ein im Wesentlichen transparentes Substrat (44), eine lichtabsorbierende Schicht (51) und eine lichtumformende Diffusorschicht (52), die auf dem im Wesentlichen transparenten Substrat ausgebildet ist.

8. Anzeige nach einem der vorangehenden Ansprüche, **dadurch gekennzeichnet, dass** die Lichtausgangsfacette eines jeden Mikroprismas einen Winkel zwischen etwa 45° und etwa 65° relativ zu der oberen Oberfläche des optischen Wellenleiters bildet.

9. Anzeige nach einem der vorangehenden Ansprüche, **dadurch gekennzeichnet, dass** der Brechungsindex n1 zwischen etwa 1,45 und 1,6 liegt, der Brechungsindex n2 zwischen etwa 1,45 und 1,6 liegt, und der Brechungsindex n3 zwischen etwa 1,3 und 1,4 liegt.

10. Anzeige nach einem der vorangehenden Ansprüche, **dadurch gekennzeichnet, dass** die Lichteingangsfacette eines jeden Mikroprismas mit der oberen Oberfläche des optischen Wellenleiters über ein dichromatisches Filter (75) gekoppelt ist.

11. Anzeige nach einem der vorangehenden Ansprüche, **dadurch gekennzeichnet, dass** jeder Neigungs-Lichtmodulator auf einem ausgewählten Mikroprisma befestigt ist.

12. Anzeige nach einem der vorangehenden Ansprüche, **dadurch gekennzeichnet, dass** die optische Schicht aus einem Fluorpolymer aufgebaut ist und jedes Mikroprisma aus einem mittels UV härtbaren Polymer aufgebaut ist.

13. Anzeige nach einem der vorangehenden Ansprüche, **dadurch gekennzeichnet, dass** jeder Neigungs-Lichtmodulator eine lichtabsorbierende Oberfläche umfasst.

14. Anzeige nach einem der Ansprüche 1 bis 12, weiter umfassend eine lichtreflektierende Facette, die auf einer dritten Facette eines jeden der Mikroprismen ausgebildet ist, wobei jeder Neigungs-Lichtmodulator eine spiegelnde lichtreflektierende untere Oberfläche und eine lichtabsorbierende obere Oberfläche aufweist.

15. Anzeige nach Anspruch 14, **dadurch gekennzeichnet, dass** die dritte Facette eines jeden Mikroprismas einen Winkel von zwischen etwa 30° und etwa 50° relativ zu der oberen Oberfläche des optischen Wellenleiters bildet.

## Revendications

1. Affichage (20, 80) comprenant :
(a) une source lumineuse pour générer de la lumière (25) ;
(b) un guide d'ondes optiques (21) pour recevoir et distribuer ladite lumière, ledit guide d'ondes optiques ayant un indice de réfraction n1, une surface supérieure (30) et une surface inférieure à distance de l'autre (31) convergeant avec ladite surface supérieure ;
(c) une pluralité de micro-prismes à distance l'un de l'autre (32), chacun desdits micro-prismes comprenant ; un indice de réfraction n2, une facette réceptrice de lumière (41) couplée optiquement à ladite surface supérieure dudit guide d'ondes optiques par l'intermédiaire d'une couche optique (39) ayant un indice de réfraction n3 qui est inférieur audit indice de réfraction n2 et audit indice de réfraction n1 et supérieur à 1, et une facette de sortie de lumière (42) située au-dessus de ladite surface supérieure dudit guide d'ondes optique et inclinée du côté opposé à celui de ladite surface inférieure dudit guide d'ondes optiques ; et
**caractérisé par**
(d) une pluralité de modulateurs lumineux basculants (33, 81), chacun desdits modulateurs de lumière basculants ayant un axe d'inclinaison (50, 85) sensiblement parallèle à ladite surface supérieure dudit guide d'ondes optiques et situé entre lesdits micro-prismes à distance l'un de l'autre ;
dans lequel la plupart des rayons lumineux sortant de chacune desdites facettes de sortie de lumière desdits micro-prismes sont dirigés vers le téléspectateur lorsqu'un modulateur lumineux basculant respectif est en première position ou absorbé dans un absorbeur de lumière (40, 82) lorsque ledit modulateur lumineux basculant respectif est en une deuxième position.

2. Affichage selon la revendication 1 comprenant en outre une couche de réflexion de lumière (35) prévue à proximité de la surface supérieure dudit guide d'ondes optiques, construite à partir d'un métal ayant une surface inférieure réfléchissant une lumière spéculaire et une surface supérieure absorbant la lumière.

3. Affichage selon la revendication 2, dans lequel ladite couche optique est formée entre ladite couche réfléchissant la lumière et ladite surface supérieure dudit guide d'ondes optiques.

4. Affichage selon la revendication 2 ou 3, dans lequel ledit modulateur lumineux basculant est actionné par une force électrostatique et ladite couche de réflexion de lumière fonctionne comme une électrode fixe pour lesdits modulateurs lumineux basculants.

5. Affichage selon l'une quelconque des revendications précédentes, dans lequel chacun des modulateurs lumineux basculants s'incline dans deux directions dudit axe d'inclinaison.

6. Affichage selon l'une quelconque des revendications précédentes, dans lequel la pluralité desdits modulateurs lumineux basculants sont divisés en une pluralité de groupes et les modulateurs lumineux de chacun desdits groupes s'inclinent simultanément sous l'effet d'une force électrostatique.

7. Affichage selon l'une quelconque des revendications précédentes comprenant en outre un couvercle (34, 84) comprenant : un substrat sensiblement transparent (44), une couche d'absorption de lumière (51) et une couche de diffusion de mise en forme de lumière (52) formée sur ledit substrat sensiblement transparent.

8. Affichage selon l'une quelconque des revendications précédentes, dans lequel ladite facette de sortie de lumière de chaque micro-prisme forme un angle compris entre environ 45 degrés centigrade et environ 65 degrés centigrade relativement à la surface supérieure dudit guide d'ondes optiques.

9. Affichage selon l'une quelconque des revendications précédentes, dans lequel ledit indice de réfraction n1 est compris entre environ 1,45 et 1,6 et ledit indice de réfraction n2 est compris entre environ 1,45 et 1,6 et ledit indice de réfraction n3 est compris entre 1,3 et 1,4.

10. Affichage selon l'une quelconque des revendications précédentes, dans lequel la facette réceptrice de lumière de chacun des micro-prismes est optiquement accouplée à ladite surface supérieure dudit guide d'ondes optiques par l'intermédiaire d'un filtre dichroïque (75).

11. Affichage selon l'une quelconque des revendications précédentes, dans lequel chacun desdits modulateurs lumineux basculants est fixé sur un micro-prisme sélectionné desdits micro-prismes.

12. Affichage selon l'une quelconque des revendications précédentes, dans lequel ladite couche optique est construite à partir de fluoropolymère et chacun desdits micro-prismes est construit à partir de polymère durcissable aux ultraviolets.

13. Affichage selon l'une quelconque des revendications précédentes, dans lequel ledit modulateur lumineux basculant comprend des surfaces d'absorption de lumière.

14. Affichage selon l'une quelconque des revendications 1 à 12 comprenant en outre une facette de réflexion de la lumière formée sur une troisième facette de chaque micro-prisme et chaque modulateur lumineux basculant comprend une surface inférieure de réflexion de lumière spéculaire et une surface supérieure d'absorption de lumière.

15. Affichage selon la revendication 14, dans lequel ladite troisième surface de chacun desdits micro-prismes forme un angle compris entre environ 30 degrés et environ 50 degrés relativement à ladite surface supérieure dudit guide d'ondes optiques.
